# EUROPEAN PATENT APPLICATION

(11) **EP 4 075 883 A1**
(43) Date of publication of application: **19.10.2022**
(21) Application number: 19955801.6
(22) Date of filing: 12.12.2019
(51) Int. Cl.: H04W 52/04

(54) **TERMINAL AND WIRELESS COMMUNICATION METHOD**

(71) Applicant: NTT DOCOMO, INC., Chiyoda-ku Tokyo 100-6150 (JP)
(72) Inventor: OKAMURA, Masaya, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/048754
(87) International publication number: WO 2021/117194

(57) **Abstract**

A terminal according to an aspect of the present disclosure includes: a control section that determines to transmit information indicating that a specific mode among a plurality of modes related to an operation of full power transmission is supported and not to transmit information indicating a transmitted precoding matrix indicator (TPMI) group allowing full power transmission; a reception section that receives information indicating a TPMI; and a transmission section that, in a case where the received TPMI and the TPMI group allowing full power transmission correspond to each other, transmits a physical uplink shared channel with full power by using a precoder based on the received TPMI. According to an aspect of the present disclosure, the overhead due to UE capability information can be suppressed.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE(3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In the existing LTE systems (for example, 3GPP Rel. 8 to 14), a user terminal (user equipment (UE)) uses at least one of a UL data channel (for example, physical uplink shared channel (PUSCH)) or a UL control channel (for example, physical uplink control channel (PUCCH)) to transmit uplink control information (UCI).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In NR, the capability of a user terminal (a terminal or user equipment (UE)) related to codebook-based full power UL transmission using a plurality of power amplifiers (PAs) has been studied. Discussions for NR so far has proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Further, configuring a UE supporting UE capability 2 or 3 to operate in at least one of two modes (modes 1 and 2) for full power transmission has been considered. In Rel-16 NR, a UE reporting UE capability information indicating support for operating in mode 1, reporting UE capability information indicating support for operating in mode 2, or reporting UE capability information regarding a TPMI group (may be referred to as TPMI set) capable of full power transmission in relation to mode 2 has been considered.

However, whether or not the UE should necessarily report both UE capability information indicating a supported mode and UE capability information regarding a TPMI group has not yet been studied. Due to the fact that the UE reports each of UE capability information indicating a supported mode and UE capability information regarding a TPMI group, the overhead may be increased.

Thus, an object of the present disclosure is to provide a terminal and a radio communication method that can suppress the overhead due to UE capability information.

### Solution to Problem

A terminal according to an aspect of the present disclosure includes: a control section that determines to transmit information indicating that a specific mode among a plurality of modes related to an operation of full power transmission is supported and not to transmit information indicating a transmitted precoding matrix indicator (TPMI) group allowing full power transmission; a reception section that receives information indicating a TPMI; and a transmission section that, in a case where the received TPMI and the TPMI group allowing full power transmission correspond to each other, transmits a physical uplink shared channel with full power by using a precoder based on the received TPMI.

### Advantageous Effects of Invention

According to an aspect of the present disclosure, the overhead due to UE capability information can be suppressed.

### Brief Description of Drawings

Fig. 1 is a diagram showing an example of association between a precoder type and a TPMI index.
Fig. 2 is a diagram illustrating the exemplary configuration of UEs assuming the full power transmission-related UE capabilities 1 to 3.
Fig. 3 is a diagram illustrating an example of association between precoder types and TPMI indices in a case where 2 antenna ports and rank 1 are used.
Fig. 4 is a diagram illustrating a first example of association between precoder types and TPMI indices in a case where 4 antenna ports and rank 1 are used.
Fig. 5 is a diagram illustrating a second example of association between precoder types and TPMI indices in a case where 4 antenna ports and rank 1 are used.
Fig. 6 is a diagram illustrating association between precoder types and TPMI indices in a case where 4 antenna ports and rank 2 are used.
Fig. 7 is a diagram illustrating an example of a schematic configuration of a radio communication system according to one embodiment.
Fig. 8 is a diagram illustrating an example of a configuration of a base station according to one embodiment.
Fig. 9 is a diagram illustrating an example of a configuration of a user terminal according to one embodiment.
Fig. 10 is a diagram illustrating an example of a hardware configuration of the base station and the user terminal according to one embodiment.

### Description of Embodiments

### (PUSCH Precoder)

In the NR, it is considered that the UE will support at least one of codebook (CB)-based transmission and non-codebook (NCB)-based transmission.

For example, it is considered that the UE uses at least a measurement reference signal (Sounding Reference Signal (SRS)) Resource Index (SRI) to determine a precoder (precoding matrix) for at least one of CB-based and NCB-based uplink shared channel (Physical Uplink Shared Channel (PUSCH)) transmissions.

In the case of CB-based transmission, the UE may determine the precoder for PUSCH transmission based on SRI, Transmitted Rank Indicator (TRI), Transmitted Precoding Matrix Indicator (TPMI) or the like. For the NCB-based transmission, the UE may determine a precoder for PUSCH transmission based on the SRI.

SRI, TRI, TPMI, or the like may be notified to the UE using downlink control information (DCI). The SRI may be specified by an SRS Resource Indicator field (SRI field) of the DCI, or may be specified by a parameter "srs-ResourceIndicator" included in an RRC information element "ConfiguredGrantConfig" of a configured grant PUSCH (configured grant PUSCH). The TRI and the TPMI may be specified by precoding information of the DCI and a layer number field ("Precoding information and number of layers" field).

The UE may report UE capability information regarding the precoder type, and the precoder type based on the UE capability information may be configured by higher layer signaling from the base station. The UE capability information may be precoder type information (may be represented by the RRC parameter "pusch-TransCoherence") used by the UE in PUSCH transmission.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), or the like.

The UE may determine the precoder used for PUSCH transmission based on the precoder type information (which may be represented by the RRC parameter "codebookSubset") contained in the PUSCH configuration information ("PUSCH-Config" information element of RRC signaling) notified by higher layer signaling. The UE may be configured with a subset of the PMI specified by the TPMI by the codebookSubset.

The precoder type may be designated by any of full coherent, fully coherent, coherent, partial coherent, non-coherent, or a combination of at least two of them (for example, which may be represented by parameters such as "fullyAndPartialAndNonCoherent", "partialAndNonCoherent").

Full coherent may mean that the all antenna ports used for transmission are synchronized (may be expressed as phase-matched, the same precoder applied, etc.). Partial coherent may mean that some port of the antenna ports used for transmission are synchronized, but that some port and other ports cannot be synchronized. Non-coherent may mean that each antenna port used for transmission cannot be synchronized.

A UE that supports a fully coherent precoder type may be assumed to support partial coherent and non-coherent precoder types. A UE that supports a partial coherent precoder type may be assumed to support a non-coherent precoder type.

The precoder type may be read as coherency, PUSCH transmission coherence, coherent type, coherence type, codebook type, codebook subset, codebook subset type, and the like.

The UE may determine the precoding matrix corresponding to a TPMI index obtained from the DCI (for example, DCI format 0_1, the same applies hereinafter) that schedules UL transmission from multiple precoders (may be referred to as precoding matrices, codebook, or the like) for CB-based transmission.

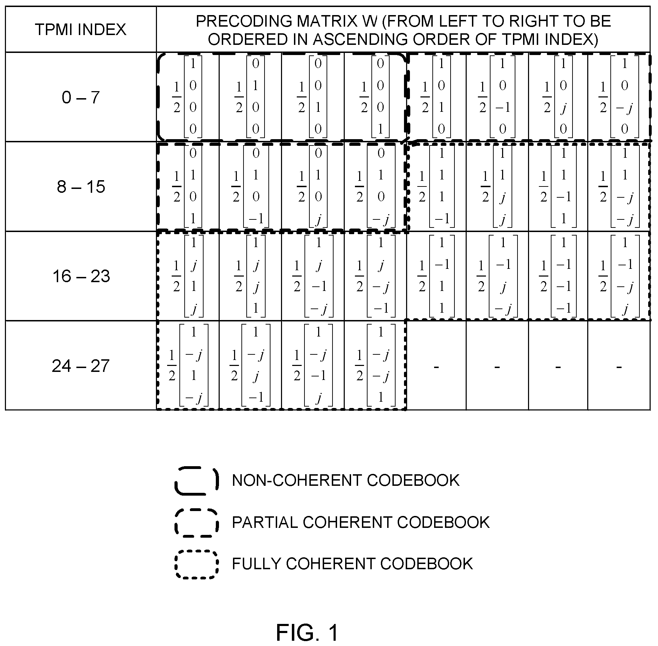

Fig. 1 is a diagram showing an example of association between a precoder type and a TPMI index. Fig. 1 is a table showing the precoding matrix W for transmission in a single layer (rank 1) using four antenna ports in discrete Fourier transform spread OFDM (DFT-s-OFDM) (with transform precoding enabled).

In Fig. 1, if the precoder type (codebookSubset) is fullyAndPartialAndNonCoherent, the UE is notified with a TPMI of 0 to 27 for a single layer transmission. In addition, if the precoder type is partialAndNonCoherent, the UE is configured with a TPMI of 0 to 11 for a single layer transmission. If the precoder type is nonCoherent, the UE is configured with any of TPMI of 0 to 3 for a single layer transmission.

Fig. 1 is a table defined currently in Rel-15 NR. In this table, if a fully coherent transmit power corresponding to index #12 to #27 is set to 1 (= (1/2)² * 4), a partial coherent transmit power corresponding to index #4 to #11 is set to 1/2 (= (1/2)² * 2), and a non-coherent transmit power corresponding to index #0 to #3 is set to 1/4 (= (1/2)² * 1).

In other words, according to the current Rel-15 NR specifications, the use of a part of codebooks in a UE performing codebook-based transmission using a plurality of ports has smaller transmission power than that of the transmission using a single port in some cases (full power transmission is unable).

Moreover, as illustrated in Fig. 1, the precoding matrix in which only one of the components in respective columns is non-zero can be referred to as a non-coherent codebook. The precoding matrix in which the predetermined number (but not all) of components in respective columns is non-zero can be referred to as a partial coherent codebook. The precoding matrix in which all components in respective columns are non-zeros can be referred to as a fully coherent codebook.

The non-coherent codebook and the partial coherent codebook can also be referred to as an antenna selection precoder. The fully coherent codebook can also be referred to as a non-antenna selection precoder.

Moreover, in the present disclosure, the partial coherent codebook can be a codebook (i.e., codebooks of TPMIs = 4 to 11 for single-layer transmission using four antenna ports) obtained by excluding codebooks corresponding to TPMIs specifying a UE configured with a non-coherent codebook subset (e.g., RRC parameter "codebookSubset" = "nonCoherent") among codebooks (precoding matrix) corresponding to TPMIs specifying a UE configured with a partial coherent codebook subset (e.g., RRC parameter "codebookSubset" = "partialAndNonCoherent") by DCI for codebook-based transmission.

Moreover, in the present disclosure, the fully coherent codebook can be a codebook (i.e., codebooks of TPMIs = 12 to 27 for single-layer transmission using four antenna ports) obtained by excluding codebooks corresponding to TPMIs specifying a UE configured with a partial coherent codebook subset (e.g., RRC parameter "codebookSubset" = "partialAndNonCoherent") among codebooks (precoding matrix) corresponding to TPMIs specifying a UE configured with a fully coherent codebook subset (e.g., RRC parameter "codebookSubset" = "fullyAndPartialAndNonCoherent") by DCI for codebook-based transmission.

### (UE capability for full power transmission)

Even when the codebook is used, it is preferable to perform full power UL transmission appropriately. Therefore, in NR, the UE capability related to codebook-based full power UL transmission using a plurality of power amplifiers (PAs) has been studied. Discussions for NR so far has proposed UE capabilities 1 to 3, as follows:
- UE capability 1: PAs that can output the maximum rated power (full rated PAs) are supported (included) on each transmission chain (Tx chain)
- UE capability 2: no Tx chain supports full rated PA
- UE capability 3: subset (a part) of Tx chains supports full rated PA

Moreover, a UE having at least one of the UE capabilities 1 to 3 can mean that the UE supports UL full power transmission. The UE can report capability information indicating that it supports the UL full power transmission capability to a network (e.g., a base station), in addition to or apart from UE capabilities 1 to 3. The configuring of a UE supporting full power transmission can be made from the network.

The UE capability 1, 2, or 3 can be replaced with a full power transmission-related UE capability 1, 2, or 3, a full power transmission type 1, 2, or 3, an electric power allocation type 1, 2, or 3, and so on. In the present disclosure, the terms of type, mode, capability, or the like can be used interchangeably. In addition, in the present disclosure, such numerals of 1, 2, or 3 can be used interchangeably as an optional set of numerals or characters, such as A, B, or C.

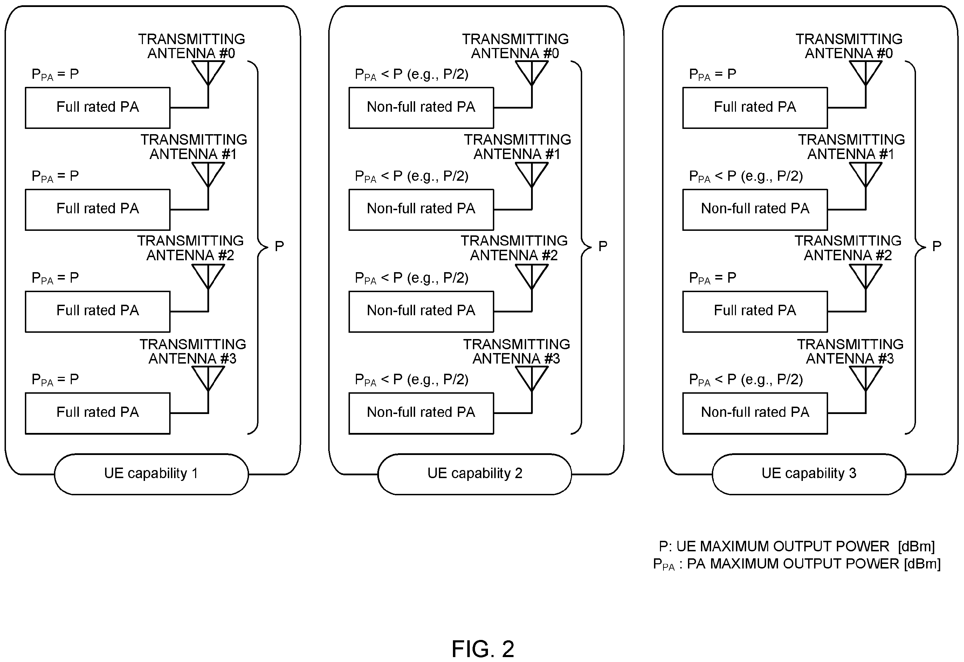

Fig. 2 is a diagram illustrating the exemplary configuration of UEs assuming the full power transmission-related UE capabilities 1 to 3. Fig. 2 illustrates in a simplified form only a PA and a transmitting antenna port (it can be replaced with a transmitting antenna) of the configuration of a UE. Moreover, this exemplary illustration shows that the number of PAs and the number of transmitting antenna ports are four, but not limited to this number.

Moreover, P indicates the UE maximum output power [dBm], and P_{PA} indicates the PA maximum output power [dBm]. Furthermore, P can be, for example, 23 dBm for a UE with power class 3 and 26 dBm for a UE with power class 2. Although P_{PA} ≤ P is assumed in the present disclosure, an embodiment of the present disclosure is applicable to a case of P_{PA} > P.

The configuration of UE capability 1 is expected to be costly to implement, but its full power transmission is possible using one or more optional antenna ports. The configuration of UE capability 2 includes only non-full rated PA and is expected to be implementable at a lower cost, but fails to perform the full power transmission using only one antenna port, so the phase, amplitude, or the like of the signal input to each PA is necessary to be controlled.

The configuration of UE capability 3 has a mixed form between the configuration of UE capability 1 and the configuration of UE capability 2. Antenna ports capable of full-power transmission (transmitting antennas #0 and #2 in this example) and antenna ports not capable of full-power transmission (transmitting antennas #1 and #3 in this example) are mixed.

Moreover, the index, number, or the like of antenna ports capable of full power transmission of UE capability 3 is not limited to this illustrated example. In addition, in this example, it is assumed that P_{PA} = P / 2 of the non-full rated PA, but the value of P_{PA} is not limited to this exemplary value.

Meanwhile, configuring a UE supporting UE capability 2 or 3 to operate in at least one of two modes (modes 1 and 2) for full power transmission has been considered. The modes 1 and 2 may be referred to as operation modes 1 and 2, respectively.

Here, mode 1 can be a mode in which a UE is configured so that one or more SRS resources included in one SRS resource set whose usage is "codebook" have the same number of SRS ports (e.g., may be referred to as the first full power transmission mode). The UE operating in mode 1 can perform full power transmission using the entire antenna ports.

The UE operating in mode 1 can be configured by the network in such a way as to use a subset of TPMIs used to combine ports within one layer to achieve full power transmission. A new codebook subset can be introduced only for a rank value, which includes a TPMI precoder corresponding to "fullyAndPartialAndNonCoherent" defined in Rel-15 NR but is not available for full power transmission.

On the other hand, the mode 2 can herein be a mode in which a UE is configured so that one or more SRS resources included in one SRS resource set whose usage is "codebook" have the different number of SRS ports (e.g., may be referred to as the second full power transmission mode). The UE operating in mode 2 can perform full power transmission using not the entire antenna ports but a part of antenna ports.

The UE operating in mode 2 can transmit PUSCH and SRS in the same way regardless of the availability of antenna virtualization. The UE in mode 2 can be notified of a set of TPMIs to achieve full power transmission because of supporting more SRS resources than one port. In the case of mode 2, two or three SRS resources can be configured for each SRS resource set (up to two for Rel-15 NR).

Mode 1 has the advantage that the required SRI field size can be smaller than that of mode 2 (full power transmission is possible with one SRS resource).

Mode 2 has the advantage that single port transmission and multiport transmission are dynamically switchable by DCI compared to mode 1. In addition, full power transmission is achievable with some antenna ports, and so, for example, it is possible to perform full power transmission using only an antenna provided with a full rated PA or using only a coherent antenna.

Moreover, the UE can determine a mode to be used for PUSCH transmission on the basis of higher layer signaling (e.g., RRC signaling), physical layer signaling (e.g., DCI), or a combination thereof. In other words, the UE can be configured or indicated with a mode for PUSCH transmission.

In Rel-16 NR, a UE reporting UE capability information indicating support for operating in mode 1, reporting UE capability information indicating support for operating in mode 2, or reporting UE capability information regarding a TPMI group (may be referred to as TPMI set) capable of full power transmission in relation to mode 2 has been considered.

A UE supporting mode 2 may apply power scaling factor = 1 for a TPMI precoder reported as the TPMI group. Moreover, the power scaling factor can mean a coefficient portion (e.g., "1/2" in the case of Fig. 1) that is multiplied by a matrix portion having elements with an absolute value of 1 in the precoding matrix corresponding to the TPMI specified by DCI. The power scaling factor can also be referred to as a scaling value or the like.

For a TPMI precoder other than that reported as the TPMI group, in a case where only one SRS resource is configured in an SRS resource set of which the use is a codebook, a UE supporting mode 2 may assume the above-mentioned power scaling factor = √ (the number of non-zero PUSCH antenna ports/the number of SRS ports).

Here, the non-zero PUSCH antenna port can mean an antenna port having non-zero PUSCH transmission power or an antenna port whose value is not zero (e.g., 1 or j) among the antenna ports whose transmission is represented by the precoding matrix (codebook subset).

For a TPMI precoder other than that reported as the TPMI group, in a case where two or more SRS resources are configured in an SRS resource set of which the use is a codebook, a UE supporting mode 2 may assume the above-mentioned power scaling factor = √ (the number of non-zero PUSCH antenna ports of an SRS resource indicated by an SRI/the number of SRS ports of the SRS resource indicated by the SRI).

The UE can apply the determined (or assumed) power scaling factor to the precoding matrix to transmit PUSCH at full power. In other words, the UE can transmit PUSH at full power by using a matrix obtained by multiplying the matrix portion of the precoding matrix by the power scaling factor.

Moreover, the power scaling factor can mean a ratio for scaling a linear value of the PUSCH transmission power determined on the basis of Path-loss or the like. In this case, the squared value of the power scaling factor described so far can correspond to the ratio (can be used interchangeably). The UE can divide the linear value of the PUSCH transmission power scaled using the ratio evenly across the non-zero PUSCH antenna ports.

In view of the foregoing, to the extent of the specification studies so far, a UE that reports mode 2 but does not report a TPMI group can perform full power transmission in the case of a TPMI indicated by an SRS resource with the number of SRS ports (nrofSRS-Ports) = 1. In a case where antenna switching is possible, for the full power transmission it is sufficient that at least one full-rated PA be provided.

Further, to the extent of the specification studies so far, a UE that reports mode 2 but does not report a TPMI group cannot perform full power transmission in the case of a TPMI indicated by an SRS resource other than those with the number of SRS ports (nrofSRS-Ports) = 1. For example, a UE that is configured with an SRS resource set having two SRS resources corresponding only to the number of SRS ports = 2 or 4 cannot perform full power transmission.

However, whether or not the UE should necessarily report both UE capability information indicating a supported mode and UE capability information regarding a TPMI group has not yet been studied. Due to the fact that the UE reports each of UE capability information indicating a supported mode and UE capability information regarding a TPMI group, the overhead may be increased.

Thus, the present inventors have conceived a terminal including: a control section that determines to transmit information indicating that a specific mode among a plurality of modes related to the operation of full power transmission is supported and not to transmit information indicating a TPMI group allowing full power transmission; a reception section that receives information indicating a TPMI; and a transmission section that, in a case where the received TPMI and the TPMI group allowing full power transmission correspond to each other, transmits a physical uplink shared channel with full power by using a precoder based on the received TPMI.

According to an aspect of the present disclosure, the overhead due to UE capability information can be suppressed, and full power transmission can be appropriately performed. Further, according to one aspect of the present disclosure, it is possible to perform uplink multi-input multi-output (UL MIMO) transmission with full power, maintaining a cell coverage similar to a single antenna. In addition, according to UL MIMO, spatial diversity gain can be obtained, which can be expected throughput improvement. Furthermore, even a UE that is not provided with a full rated PA can appropriately perform full power transmission.

Hereinafter, embodiments according to the present disclosure will be described in detail with reference to the drawings. The radio communication methods according to the embodiments may be applied alone or in combination. Note that in the present disclosure, "A/B" and "at least one of A and B" may be interchangeable.

Moreover, in the present disclosure, the terms "antenna" and "antenna port" can be used interchangeably.

In the present disclosure, the term "full power" may be replaced with "power boosting", "maximum power", "maximum output power", "maximum transmission power", "extended power", "power higher than that of Rel-15 UE", and the like.

Further, in the present disclosure, the phrase "having UE capability X" (X = 1, 2, or 3) may be replaced with reporting UE capability X, performing full power transmission using the configuration of UE capability X, and the like.

In the present disclosure, the phrase "having coherent capability" (e.g., fully coherent, partial coherent, and non-coherent) may be replaced with reporting the capability, being configured with coherent, and so on.

Further, a non-coherent UE, a partial coherent UE, and a fully coherent UE may be replaced with a UE having capability relating to non-coherent, a UE having capability relating to partial coherent, and a UE having capability relating to fully coherent, respectively.

Further, the non-coherent UE, the partial coherent UE, and the fully coherent UE can refer to UEs in which codebook subsets of "nonCoherent", "partialAndNonCoherent", and "fullyAndPartialAndNonCoherent" are configured in the upper layer, respectively. Moreover, in the present disclosure, "codebook subset" and "codebook" can be used interchangeably.

The non-coherent UE, the partial coherent UE, and the fully coherent UE can refer to UEs capable of transmitting using the non-coherent codebook, the partial coherent codebook, and the fully coherent codebook, respectively.

In the present disclosure, mode 1 or 2 is described as having a usage related to the SRS resource set of the codebook, but is not limited to this example. In the respective embodiments, modes 1 or 2 may be replaced with, for example, mode 1 or 2 for SRS resource sets whose usage is non-codebook.

Further, in the present disclosure, the term "non-coherent" can be used interchangeably with "partial coherent" or "non-coherent and partial coherent".

In the present disclosure, the following two manners are conceivable as reporting manners at the time of the UE's reporting a mode as UE capability information. In the present disclosure, the report, the notification, and the transmission may be replaced with each other.
(Manner 1) Report any one of UE capability 1 (which may be referred to as mode 0)/mode 1/mode 2
(Manner 2) Report any one of UE capability 1 (mode 0)/mode 1/mode 2/both mode 1 and mode 2

However, in a case where the above manner 1 or manner 2 is used, the UE may necessarily report a TPMI group, or in a case where a specific condition is satisfied, need not report a TPMI group.

Note that in the present disclosure, "TPMI = matrix of X", "TPMI = X", and "TPMI index = X" may be replaced with each other. Further, the non-coherent codebook and the partial coherent codebook can also be referred to as an antenna selection precoder. The fully coherent codebook can also be referred to as a non-antenna selection precoder. A TPMI corresponding to an antenna selection precoder may be referred to as an antenna selection TPMI. A TPMI corresponding to a non-antenna selection precoder may be referred to as a non-antenna selection TPMI.

In the present disclosure, a "TPMI precoder", a "TPMI group", "(a set of) one or more TPMIs", a "TPMI group enabling full power", a "TPMI group supporting full power", and the like may be replaced with each other.

In the present disclosure, "support...", "report having the capability of... to the network", and the like may be replaced with each other.

In the present disclosure, capability information indicating that mode X (X is an integer; for example, X = 0, 1, or 2) is supported may be referred to as mode X capability information. Further, the "ability information" in the present disclosure may be simply replaced with "information".

### (Radio communication method)

### <First Embodiment>

A first embodiment relates to a method for transmitting information indicating a mode supported by a UE and information indicating a TPMI group allowing full power transmission (adapted to full power transmission). In the first embodiment, it is assumed that the above manner 2 is used as a manner when reporting a mode as UE capability information, but manner 1 may be used. Further, in the first embodiment it is premised that the UE supports at least mode 2, but it may be premised that the UE supports at least another mode (for example, mode 1).

In a case where the UE supports only mode 2, the UE may perform control to transmit, as UE capability information, information indicating that only mode 2 is supported (or neither capability 1 (mode 0) nor mode 1 is supported) and to necessarily transmit, to a network (NW) (for example, a base station, or gNB), information indicating a TPMI group allowing full power transmission.

In a case where the UE supports both mode 1 and mode 2, the UE may transmit, as UE capability information, information indicating that both mode 1 and mode 2 are supported (or capability 1 (mode 0) is not supported), and need not transmit, to the NW, information indicating a TPMI group allowing full power transmission.

In a case where the UE transmits, as UE capability information, information indicating that only mode 2 is supported, the UE need not necessarily transmit, to the NW, information indicating a TPMI group allowing full power transmission. In this case, the not transmitting of information indicating a TPMI group indicates that both mode 1 and mode 2 are supported. In this case, even if manner 1 is applied as a manner at the time of reporting a mode, it can be indicated that both mode 1 and mode 2 are supported.

In a case where the UE transmits, as UE capability information, information indicating that only mode 2 is supported, the UE may transmit, to the NW, information indicating a TPMI group allowing full power transmission. In this case, the transmitting of information indicating a TPMI group indicates that only mode 2 is supported.

In a case where the UE has transmitted, as UE capability information, information indicating that both mode 1 and mode 2 are supported and is configured with mode 2, the UE may assume that a precoder for performing full power transmission in mode 2 is prescribed in the specifications (for example, the precoder is a TPMI shown in a second embodiment described later).

After transmitting information indicating that a specific mode (for example, mode 2) is supported, the UE receives information indicating a TPMI (for example, a precoding-information-and-number-of-layers field of DCI), and transmits a physical uplink shared channel by using a precoder based on the indicated TPMI.

As above, the UE may transmit only either one of information indicating that a specific mode (for example, mode 2) among a plurality of modes related to the operation of full power transmission is supported and information indicating a TPMI group allowing full power transmission. For example, it is assumed that a TPMI group supported by a UE that does not transmit information indicating a TPMI group is prescribed in the NW. In this case, in a case where the UE does not transmit information indicating a TPMI group, the UE can report, to the NW, both a supported mode and a TPMI group supporting full power transmission by simply reporting which mode is supported. Thereby, the overhead due to UE capability information can be suppressed.

### <Second Embodiment>

A second embodiment relates to processing in a case where the UE supports a specific mode (mode 2, or both mode 1 and mode 2) among a plurality of modes related to the operation of full power transmission and has determined to transmit (signal) information indicating that the specific mode is supported and not to transmit (signal) information indicating a TPMI group.

In the second embodiment, the UE transmits information indicating that a specific mode (for example, mode 2, or both mode 1 and mode 2) is supported and information indicating a precoder type, and receives information indicating a TPMI. Then, in a case where the received TPMI and the TPMI group allowing full power transmission correspond to each other, the UE transmits a physical uplink shared channel with full power by using a precoder based on the received TPMI.

Further, in a case where the received TPMI and the TPMI group allowing full power transmission correspond to each other and the reported precoder type is a specific precoder type, the UE may determine to transmit a physical uplink shared channel with full power. Then, the UE may transmit a physical uplink shared channel with full power by using a precoder based on the received TPMI. Note that the UE of the second embodiment may assume that a specific mode (mode 2) is configured from the NW.

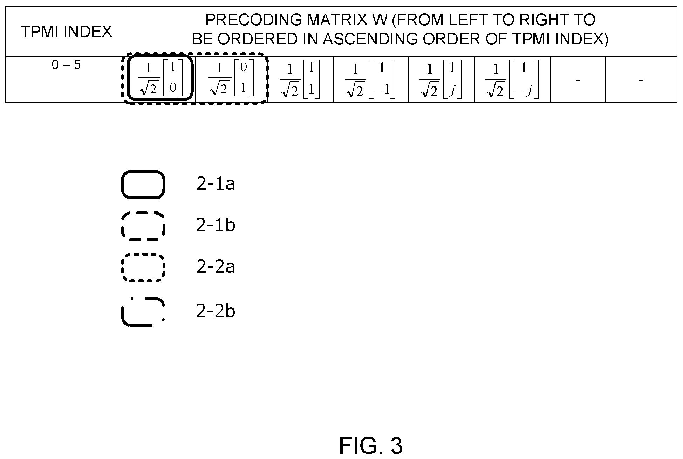

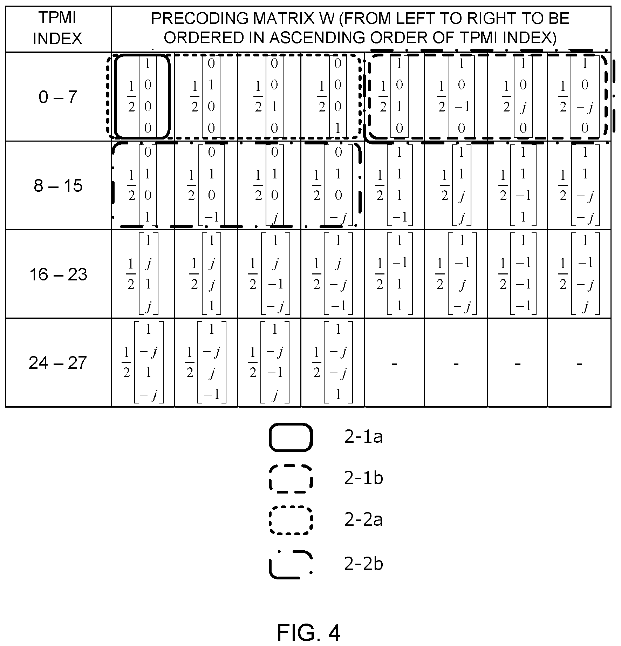

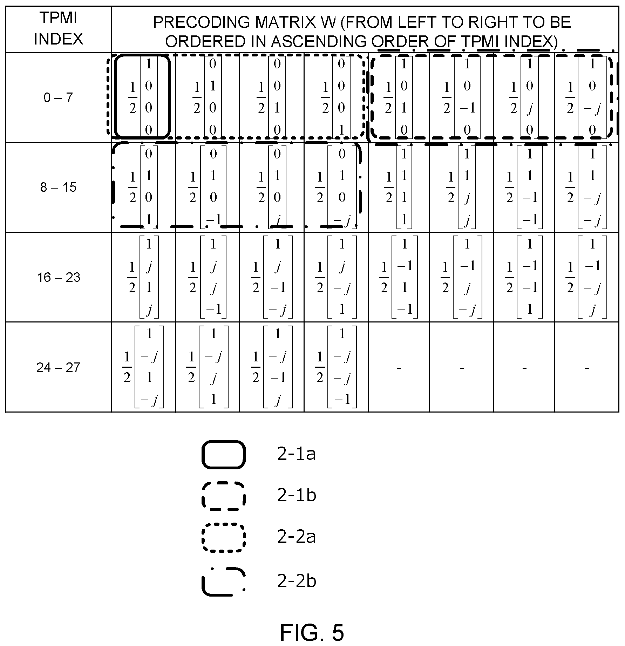

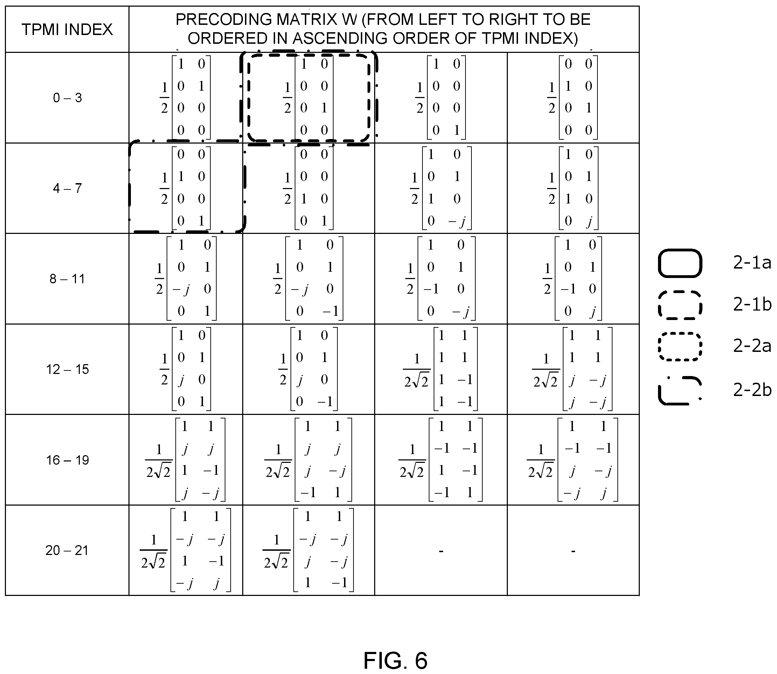

The second embodiment will now be described using Fig. 3 to Fig. 6. Fig. 3 is a diagram illustrating an example of association between precoder types and TPMI indices in a case where 2 antenna ports and rank 1 are used. Fig. 4 is a diagram illustrating a first example of association between precoder types and TPMI indices in a case where 4 antenna ports and rank 1 are used. Fig. 5 is a diagram illustrating a second example of association between precoder types and TPMI indices in a case where 4 antenna ports and rank 1 are used. Note that in the example shown in Fig. 4 it is assumed that precoding transformation (transform precoding) is valid and in the example shown in Fig. 5 it is assumed that precoding transformation is invalid. Fig. 6 is a diagram illustrating association between precoder types and TPMI indices in a case where 4 antenna ports and rank 2 are used.

In Fig. 3 to Fig. 6, TPMIs for which the UE assumes full power transmission (power scaling factor = 1) when indicated are described. The TPMI for which full power transmission is assumed may be referred to as a default TPMI for full power transmission or the like.

### [Method 2-1]

In a case where the UE has transmitted (signaled), as a precoder type, information indicating non-coherent (a specific precoder type) (for example, the RRC parameter pusch-TransCoherence = {nonCoherent}) and is indicated with TPMI (TPMI index) = {0} (2 antenna ports, apply rank 1 (2-1a of Fig. 3))/TPMI (TPMI index) = {0} (4 antenna ports, apply rank 1 (2-1a of Fig. 4 and Fig. 5)), the UE may determine to transmit a physical uplink shared channel with full power. Note that it is assumed that the indicated TPMI corresponds to a TPMI group allowing full power transmission.

Note that in a case where TPMI (TPMI index) = {0} (2 antenna ports, apply rank 1) is indicated, the UE may apply [23 X]^{T} [dbm] (T represents a transposed matrix, the same applies hereinafter) as the transmission power. That is, full power transmission may be performed by using either one of the 2 antenna ports. Further, in a case where TPMI (TPMI index) = {0} (4 antenna ports, apply rank 1) is indicated, the UE may apply [23 X X X]^{T} [dbm] as the transmission power. That is, full power transmission may be performed by using any one of the 4 antenna ports.

Note that in the present disclosure, "X" in a matrix may mean that it is not assumed as a combination of ports for full power transmission, or may mean that it is smaller than the other values in the same matrix (for example, 0). The UE may apply full power transmission by using a port that is not "X" in a matrix.

Further, in the present disclosure, the UE's applying a matrix as the transmission power may mean that it is assumed that the UE has a PA configuration corresponding to the matrix.

In a case where the UE has transmitted, as a precoder type, information indicating partial coherent (a specific precoder type) (for example, the RRC parameter pusch-TransCoherence = {partialCoherent}) and is indicated with TPMI (TPMI index) = {4, 5, 6, 7} (4 antenna ports, apply rank 1 (2-1b of Fig. 4 and Fig. 5))/TPMI (TPMI index) = {1} (4 antenna ports, apply rank 2 (2-1b of Fig. 6)), the UE may determine to transmit a physical uplink shared channel with full power. Note that it is assumed that the indicated TPMI corresponds to a TPMI group allowing full power transmission.

Note that in a case where TPMI (TPMI index) = {4, 5, 6, 7} (4 antenna ports, apply rank 1) is indicated, the UE may apply [20 X 20 X]^{T} [dbm] as the transmission power. That is, although the transmission power of each antenna port is not full power, full power transmission is performed by using a combination of any two of the 4 antenna ports. Also in a case where TPMI (TPMI index) = {1} (4 antenna ports, apply rank 2) is indicated, the UE may apply [20 X 20 X]^{T} [dbm] as the transmission power. Also in this case, similarly, the UE performs full power transmission by using a combination of any two of the 4 antenna ports.

In method 2-1, the UE may set power scaling factor = 1 when transmitting a physical uplink shared channel with full power. Further, in a case where a TPMI different from the above TPMI is indicated, the UE may determine not to transmit a physical uplink shared channel with full power, and may set the power scaling factor by the processing shown in the following method 2-3. The UE may assume that the designated TPMI is an implicitly designated TPMI group.

### [Method 2-2]

In a case where the UE has transmitted, as a precoder type, information indicating non-coherent (a specific precoder type) (for example, the RRC parameter pusch-TransCoherence = {nonCoherent}) and is indicated with TPMI (TPMI index) = {0, 1} (2 antenna ports, apply rank 1 (2-2a of Fig. 3))/TPMI (TPMI index) = {0, 1, 2, 3} (4 antenna ports, apply rank 1 (2-2a of Fig. 4 and Fig. 5)), the UE may determine to transmit a physical uplink shared channel with full power. Note that it is assumed that the indicated TPMI corresponds to a TPMI group allowing full power transmission.

Note that in a case where TPMI (TPMI index) = {0, 1} (2 antenna ports, apply rank 1) is indicated, the UE applies [23 X]^{T} [dbm] or [X 23]^{T} [dbm] as the transmission power. That is, full power transmission is performed by using either one of the 2 antenna ports. In a case where TPMI (TPMI index) = {0, 1, 2, 3} (4 antenna ports, apply rank 1) is indicated, the UE applies [23 X X X]^{T} [dbm], [X 23 X X]^{T} [dbm], [X X 23 X]^{T} [dbm], or [X X X 23]^{T} [dbm] as the transmission power. That is, full power transmission is performed by using any one of the 4 antenna ports.

In a case where the UE has transmitted, as a precoder type, information indicating partial coherence (a specific precoder type) (for example, the RRC parameter pusch-TransCoherence = {partialCoherent}) and is indicated with TPMI (TPMI index) = {4, 5, 6, 7, 8, 9, 10, 11} (4 antenna ports, apply rank 1 (2-2b of Fig. 4 and Fig. 5))/TPMI (TPMI index) = {1, 4} (4 antenna ports, apply rank 2 (2-2b of Fig. 6)), the UE may determine to transmit a physical uplink shared channel with full power. Note that it is assumed that the indicated TPMI corresponds to a TPMI group allowing full power transmission.

Note that in a case where TPMI (TPMI index) = {4, 5, 6, 7} (4 antenna ports, apply rank 1) is indicated, the UE applies [20 X 20 X]^{T} [dbm] as the transmission power, and in a case where TPMI (TPMI index) = {8, 9, 10, 11} (4 antenna ports, apply rank 1) is indicated, the UE applies [X 20 X 20]^{T} [dbm] as the transmission power. That is, although the transmission power of each antenna port is not full power, full power transmission is performed by using any two of the 4 antenna ports. In a case where TPMI (TPMI index) = {1} (4 antenna ports, apply rank 2) is indicated, the UE applies [20 X 20 X]^{T} [dbm] as the transmission power, and in a case where TPMI (TPMI index) = {4} (4 antenna ports, apply rank 2) is indicated, the UE applies [X 20 X 20]^{T} [dbm] as the transmission power. Also in this case, the UE performs full power transmission by using any two of the 4 antenna ports.

In method 2-2, it is assumed that the UE can perform antenna switching in accordance with the received information indicating a TPMI. For example, in a case where the precoding matrix 1/2[1 0 1 0]^{T} is designated, transmission antennas #0 and #2 in the example of Fig. 2 are used, and the transmission power becomes [20 X 20 X]^{T} [dbm]. In a case where after that the precoding matrix 1/2[0 1 0 1]^{T} is designated, antenna switching is performed to use transmission antennas #1 and #3, and the transmission power becomes [X 20 X 20]^{T} [dbm].

In this case, the UE uses PA #0 and PA #2 to perform power adjustment on signals that have passed through baseband sections, modulation units, etc. originally supposed to be connected to transmission antenna ports #0 and #2, and transmits the signals via the switched antenna ports #1 and #3.

In method 2-2, the UE may set power scaling factor = 1 when transmitting a physical uplink shared channel with full power. Further, in a case where a TPMI different from the above TPMI is indicated, the UE may determine not to transmit a physical uplink shared channel with full power, and may determine the power scaling factor by the processing shown in the following method 2-3. The UE may assume that the designated TPMI is an implicitly designated TPMI group.

### [Method 2-3]

The UE may apply any of the following (1) to (3) as a method for determining the power scaling factor.
(1) The UE sets the power scaling factor of the precoder of the reported TPMI, which supports full power transmission, to 1.
(2) In a case where only one SRS resource is configured in another TPMI precoder, the UE determines the power scaling factor by dividing #non-zero-PUSCH-port by #SRS-ports.
(3) In another TPMI precoder, the UE determines the power scaling factor by #non-zero PUSCH port/#SRS ports (#SRS ports in an SRS resource indicated by an SRI).

### [Others]

In the present disclosure, the UE may be configured/activated with a mode/TPMI by higher layer signaling (for example, RRC signaling, or an MAC CE).

In the present disclosure, in a case where the precoder type of the UE is non-coherent, it may be premised that the UE has at least one full-rated PA (supports UE capability 3). That is, all UEs that report to the NW that both mode 1 and mode 2 are supported may be UEs supporting UE capability 3. This is because, according to the second embodiment, a non-coherent UE that reports to the NW that both mode 1 and mode 2 are supported needs to have one full-rated PA.

Further, in a case where the precoder type of the UE is non-coherent, it may be assumed that a UE having no full-rated PA (a UE supporting UE capability 2) does not report to the NW that both mode 1 and mode 2 are supported. A UE having no full-rated PA may be replaced with a UE that cannot perform full power transmission with a single antenna without using virtualization or a UE not having a PA satisfying the maximum output of a power class.

Note that the numbers "23" and "20" of the present disclosure are values with the output power of a power class 3 UE in mind, and the number is not limited thereto. "23" may be replaced with a first power value (for example, the maximum output power of a UE of a power class), and "20" may be replaced with a second power value (for example, the value of the maximum output power - 3 [dBm]).

According to the embodiment described above, the UE can appropriately perform full power transmission. Further, in a case where UE capability information indicating a supported mode is transmitted and UE capability information regarding a TPMI group is not transmitted, the overhead due to UE capability information can be suppressed.

### (Radio communication system)

Hereinafter, a configuration of a radio communication system according to one embodiment of the present disclosure will be described. In this radio communication system, communication is performed using any one of the radio communication methods according to the embodiments of the present disclosure or a combination thereof.

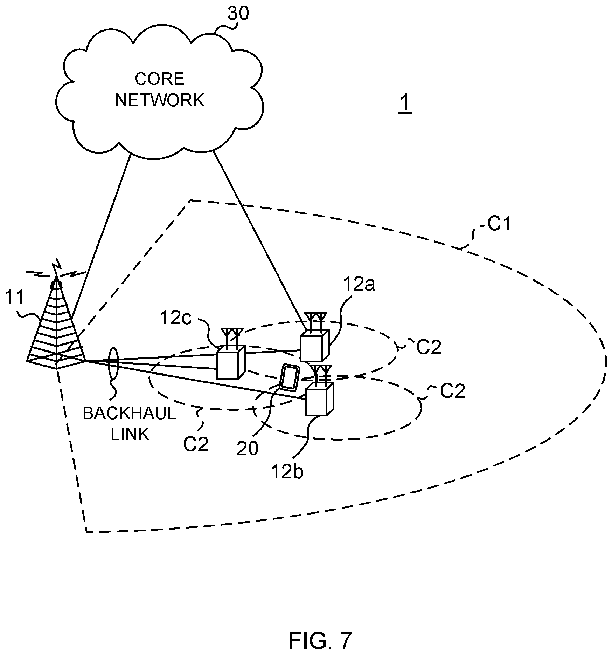

Fig. 7 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base station)

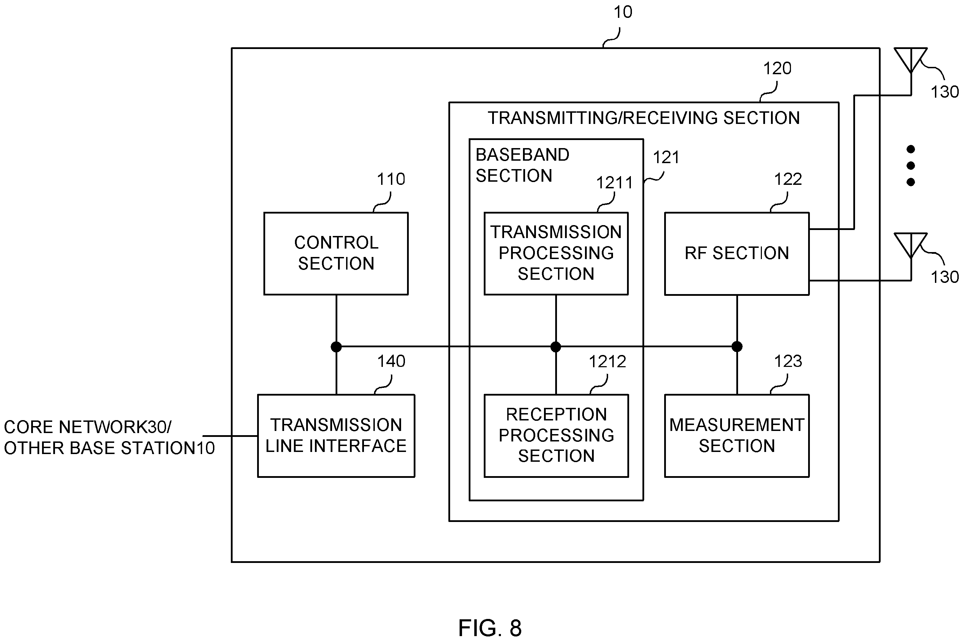

Fig. 8 is a diagram illustrating an example of a configuration of the base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmission/reception section, or may be constituted by a transmission section and a reception section. The transmission section may include the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmission/reception antenna 130, and the transmission line interface 140.

Note that the transmitting/receiving section 120 may receive information indicating that a specific mode among a plurality of modes related to the operation of full power transmission is supported, and need not receive information indicating a TPMI group allowing full power transmission. The transmitting/receiving section 120, in a case where a TPMI that it has transmitted and a TPMI group allowing full power transmission correspond to each other, may receive a physical uplink shared channel that is transmitted with full power by using a precoder based on the TPMI that it has transmitted. Note that "notification" in the present disclosure may be replaced with "indication", "configuration", or "transmission".

### (User Terminal)

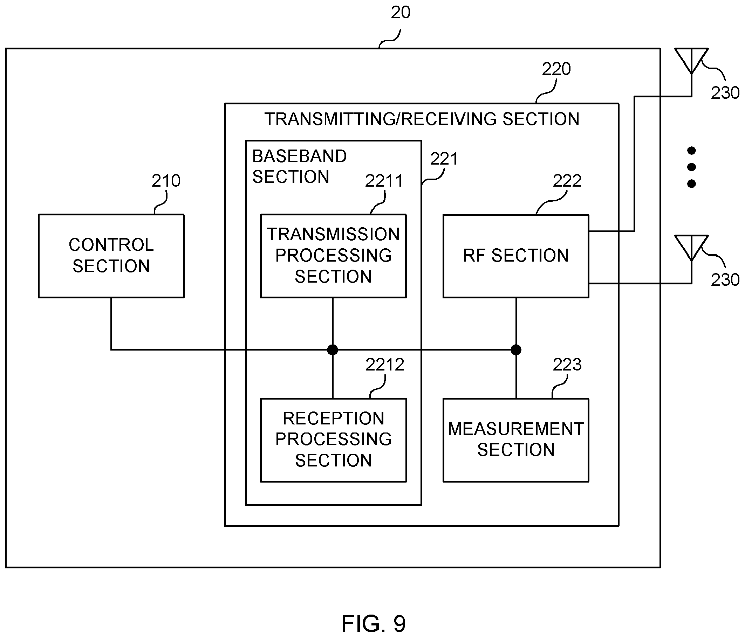

Fig. 9 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmission/reception section, or may include a transmission section and a reception section. The transmission section may include the transmission processing section 2211 and the RF section 222. The reception section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220 or the transmission/reception antenna 230.

Note that the transmitting/receiving section 220 may transmit information indicating that a specific mode among a plurality of modes related to the operation of full power transmission is supported, and need not transmit information indicating a TPMI group allowing full power transmission. The transmitting/receiving section 220 may receive the information indicating the TPMI. In a case where the received TPMI and the TPMI group allowing full power transmission correspond to each other, the transmitting/receiving section 220 may transmit a physical uplink shared channel with full power by using a precoder based on the received TPMI.

In a case where the received TPMI and the TPMI group allowing full power transmission correspond to each other and a reported precoder type is a specific precoder type, the transmitting/receiving section 220 may transmit a physical uplink shared channel with full power. The transmitting/receiving section 220 may perform antenna switching in accordance with the received information indicating a TPMI.

The control section 210 may determine to transmit information indicating that a specific mode among a plurality of modes related to the operation of full power transmission is supported and not to transmit information indicating a TPMI group allowing full power transmission. In a case where the terminal supports mode 1 and mode 2 among the plurality of modes, the control section 210 may determine to transmit information indicating that mode 1 and mode 2 are supported and not to transmit information indicating a TPMI group.

### (Hardware configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (component) that has a transmission function may be referred to as a transmission section (transmitting unit), a transmitter, and the like. In any case, as described above, the implementation method is not particularly limited.

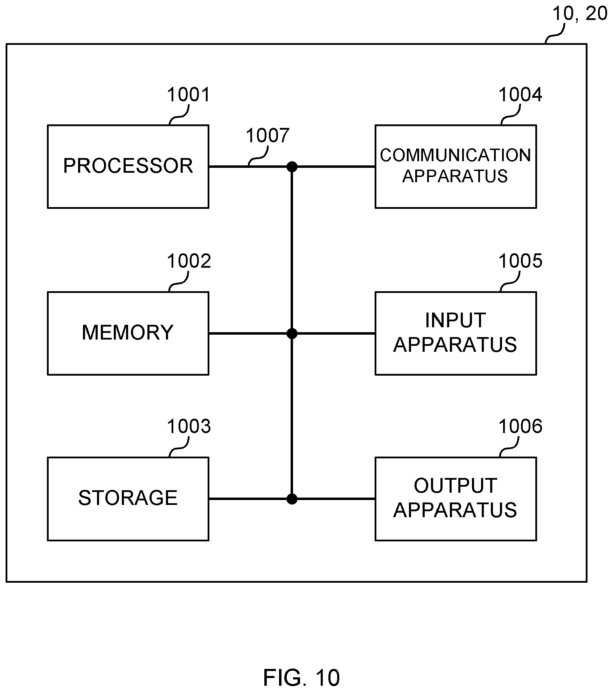

For example, the base station, the user terminal, or the like according to one embodiment of the present disclosure may function as a computer that executes the processing of the radio communication method in the present disclosure. Fig. 10 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading predetermined software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be formed with one or more durations (frames) in the time domain. Each of the one or more periods (frames) included in the radio frame may be referred to as a subframe. Further, the subframe may include one or more slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using a mini slot may be referred to as "PDSCH (PUSCH) mapping type B".

A radio frame, a subframe, a slot, a mini slot, and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe, or one TTI in length. One TTI, one subframe, and the like may be each formed with one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals, and so on may be input and output via a plurality of network nodes.

The information, signals, and so on that are input and/or output may be stored in a specific location (for example, in a memory), or may be managed in a control table. The information, signals, and the like to be input and output can be overwritten, updated, or appended. The output information, signals, and the like may be deleted. The information, signals, and so on that are input may be transmitted to other pieces of apparatus.

Notification of information may be performed not only using the aspects/embodiments described in the present disclosure but also using another method. For example, the notification of information in the present disclosure may be performed using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server, or another remote source using at least one of a wired technology (coaxial cable, optical fiber cable, twisted pair, digital subscriber line (DSL), or the like) and a radio technology (infrared rays, microwaves, and the like), at least one of the wired technology or the radio technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some operation.

In addition, to "judge (determine)" may be replaced with "assuming", "expecting", "considering", and so on.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a control section that determines to transmit information indicating that a specific mode among a plurality of modes related to an operation of full power transmission is supported and not to transmit information indicating a transmitted precoding matrix indicator (TPMI) group allowing full power transmission;
a reception section that receives information indicating a TPMI; and
a transmission section that, in a case where the received TPMI and the TPMI group allowing full power transmission correspond to each other, transmits a physical uplink shared channel with full power by using a precoder based on the received TPMI.

2. The terminal according to claim 1, wherein
in a case where the received TPMI and the TPMI group allowing full power transmission correspond to each other and a reported precoder type is a specific precoder type, the transmission section transmits the physical uplink shared channel with full power.

3. The terminal according to claim 1 or 2, wherein
the transmission section performs antenna switching in accordance with the received information indicating a TPMI.

4. The terminal according to any one of claims 1 to 3, wherein
in a case where the terminal supports mode 1 and mode 2 among the plurality of modes, the control section determines to transmit information indicating that the mode 1 and the mode 2 are supported and not to transmit the information indicating a TPMI group.

5. A radio communication method for a terminal, the method comprising:
a step of determining to transmit information indicating that a specific mode among a plurality of modes related to an operation of full power transmission is supported and not to transmit information indicating a transmitted precoding matrix indicator (TPMI) group allowing full power transmission;
a step of receiving information indicating a TPMI; and
a step of, in a case where the received TPMI and the TPMI group allowing full power transmission correspond to each other, transmitting a physical uplink shared channel with full power by using a precoder based on the received TPMI.
